# EUROPEAN PATENT APPLICATION

(11) **EP 3 539 709 A2**
(43) Date of publication of application: **18.09.2019**
(21) Application number: 19152997.3
(22) Date of filing: 22.01.2019
(51) Int. Cl.: B23K 20/12

(54) **FRICTION STIR WELDING TOOL, FRICTION STIR WELDING APPARATUS, AND FRICTION STIR WELDING METHOD**

(30) Priority: 12.03.2018 JP 2018044583
(71) Applicant: Kabushiki Kaisha Toshiba, Minato-ku Tokyo 105-8001 (JP)
(72) Inventor: Tomioka, Taizo, Tokyo, 105-8001 (JP)
(74) Representative: Hoffmann Eitle

(57) **Abstract**

According to one embodiment, a friction stir welding tool (1) includes a probe pin part (4) and a shoulder part (2). The probe pin part (4) has a spiral first groove (4a) and a spiral second groove (4b). The spiral first groove (4a) is provided at one end portion of the probe pin part (4). The second groove (4b) is provided at the other end portion of the probe pin part (4) and has the reverse thread orientation of the first groove (4a). The probe pin part (4) has a columnar shape. The shoulder part (2) has a first hole (2b). A spiral ridge conforming to the second groove (4b) is provided on an inner wall of the first hole (2b). The probe pin part (4) and the shoulder part (2) are fastened at the second groove (4b). A portion of the probe pin part (4) where the first groove (4a) is provided protrudes from an end face (2a) of the shoulder part (2).

## Description

### FIELD

Embodiments described herein relate generally to a friction stir welding tool, a friction stir welding apparatus, and a friction stir welding method.

### BACKGROUND

In friction stir welding (FSW), the pressure and the angular moment of a rotating tool (machine tool) causes the plastic flow of members (main materials) to be joined.

The tool includes a shoulder, and a probe pin provided at one end face of the shoulder. The tool has a substantially circular columnar shape; and the perimeter portion of the circular column end face is called the shoulder face. The probe pin is provided at substantially the center of the shoulder face. A spiral groove is provided in the side face of the probe pin.

When performing friction stir welding, the tool is rotated and inserted into the members to be joined so that the shoulder sinks 0.1 mm to 0.2 mm into the joining members. Then, the joining members are softened by frictional heat; and a portion of the joining members near the tool flows to swirl downward due to the spiral groove.

Here, a tool having a low probe pin height is necessary to perform the friction stir welding of thin plates butted together. For example, when the plate thickness is 2.0 mm, the protruding length (the height dimension) of the probe pin from the shoulder face is 1.7 mm to 1.8 mm. However, because the probe pin is provided at the end face of the shoulder, the end face of the shoulder interferes with the cutting tool that forms the spiral groove if the protruding length (the height dimension) of the probe pin from the end face of the shoulder is short; and it is difficult to form the spiral groove.

Generally, the ratio of the probe pin diameter to the shoulder diameter is 1:2.5 to 1:3. Accordingly, the distance from the shoulder perimeter to the probe pin side face is about 1/3 of the shoulder diameter.

The probe pin diameter often is set to be not less than 1 times the probe pin height to prevent damage when welding. Therefore, when the tool is used for a plate having a thickness of 2.0 mm, for example, the probe pin diameter is set to be about 3 mm; and the shoulder diameter is set to be about 9 mm. The distance from the shoulder perimeter to the pin side face is set to be about 3 mm. In such a case, the interference between the shoulder perimeter and the cutting tool makes it difficult to groove the side face of a probe pin having a height of 1.7 mm to 1.8 mm. Although a thinner cutting tool could be used, such a cutting tool is damaged easily; and the manufacturing cost of the tool undesirably increases.

In such a case, the spiral groove can be formed even in a short probe pin if the probe pin and the shoulder are formed separately. Therefore, technology has been proposed in which the probe pin having the spiral groove is inserted into the shoulder and then fixed to the shoulder by a set screw butting against the probe side face.

However, the frictional heat that is generated during the friction stir welding is transferred to the set screw holding the probe pin; and the protruding length of the probe pin may change due to loosening of the set screw. If the protruding length of the probe pin changes, the probe pin may be damaged; or the quality of the joined portion may degrade. Furthermore, the reduced cross-sectional area of the probe pin due to the partial flattening of the probe pin side face to receive the set screw increases the likelihood of breaking during welding.

Therefore, it is necessary to develop a friction stir welding tool that has a small diameter, has a spiral groove on the probe pin side, and does not break easily.

### BRIEF DESCRIPTION OF THE DRAWINGS

FIG. 1 is a schematic perspective view illustrating a friction stir welding tool;
FIGS. 2A to 2C are schematic cross-sectional views of the friction stir welding tool;
FIG. 3 is a schematic view of a probe pin part;
FIG. 4 is a schematic view illustrating the state when manufacturing a probe pin according to a comparative example;
FIG. 5 is a schematic cross-sectional view illustrating a probe pin according to a comparative example;
FIGS. 6A to 6C are schematic views illustrating a friction stir welding tool according to another embodiment; and
FIG. 7 is a schematic view illustrating a friction stir welding apparatus.

### DETAILED DESCRIPTION

According to one embodiment, a friction stir welding tool includes a probe pin part and a shoulder part. The probe pin part has a spiral first groove and a spiral second groove. The spiral first groove is provided at one end portion of the probe pin part. The second groove is provided at the other end portion of the probe pin part and has the reverse thread orientation of the first groove. The probe pin part has a columnar shape. The shoulder part has a first hole. A spiral ridge conforming to the second groove is provided on an inner wall of the first hole. The probe pin part and the shoulder part are fastened at the second groove. A portion of the probe pin part where the first groove is provided protrudes from an end face of the shoulder part.

Various embodiments are described below with reference to the accompanying drawings. In the specification and drawings, components similar to those described previously or illustrated in an antecedent drawing are marked with like reference numerals, and a detailed description is omitted as appropriate.

### Friction stir welding tool

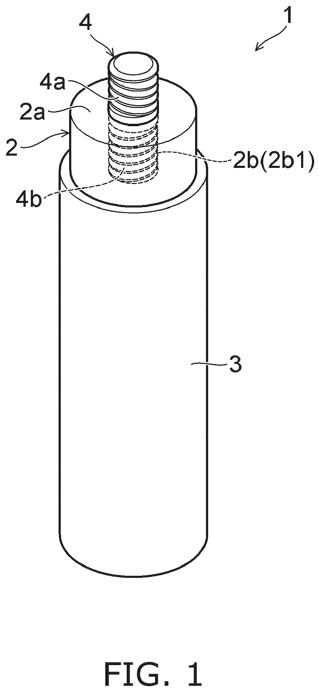

FIG. 1 is a schematic perspective view illustrating a friction stir welding tool 1.

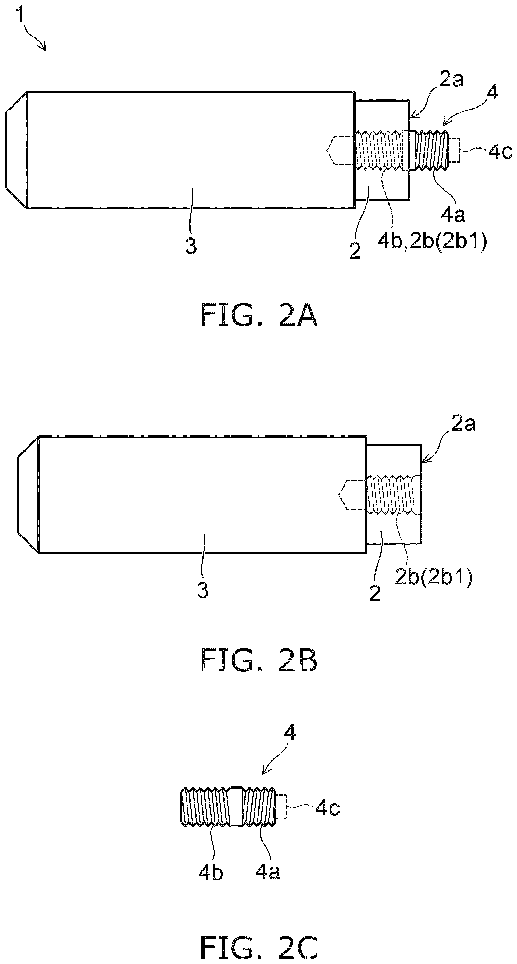

FIGS. 2A to 2C are schematic cross-sectional views of the friction stir welding tool 1.

FIG. 2A is a schematic cross-sectional view of the friction stir welding tool 1.

FIG. 2B is a schematic cross-sectional view of a shoulder part 2 and a shank 3.

FIG. 2C is a schematic view of a probe pin part 4.

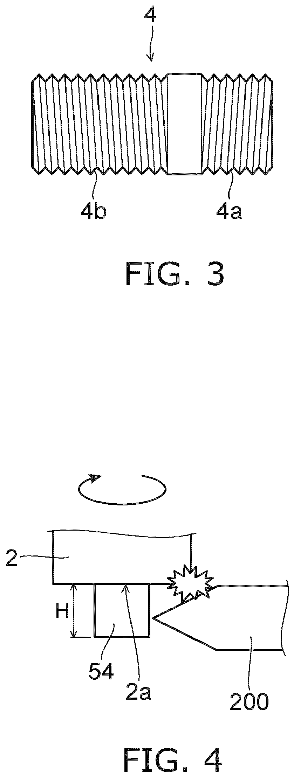

FIG. 3 is a schematic view of the probe pin part 4.

As shown in FIG. 1 and FIGS. 2A to 2C, the friction stir welding tool 1 (hereinbelow, called simply the tool 1) includes the shoulder part 2, the shank 3, and the probe pin part 4 and is fastened together using spiral grooves provided in the probe pin part 4 and the shoulder part 2. The shoulder part 2, the shank 3, and the probe pin part 4 are arranged substantially coaxially. A Tool body comprises the shoulder part 2 and the shank 3. The tool 1 comprises the tool body and the probe pin part 4.

Typically, the shoulder part 2 and the shank 3 are formed integrally as the tool body. However, the embodiments cannot be limited as the shoulder part 2 and the shank 3 are formed integrally as the tool body. The shoulder part 2 and the shank 3 may be formed as different parts and joined together as the tool body.

As shown in FIG. 1 and FIG. 3, the probe pin part 4 can have a circular columnar shape. The probe pin part 4 is provided at substantially the center of an end face 2a (the shoulder face) of the shoulder part 2.

A spiral groove 4a (corresponding to an example of the first groove) is provided at one end portion of the probe pin part 4. A spiral groove 4b (corresponding to an example of the second groove) is provided at the other end portion of the probe pin part 4. The groove 4a portion of the probe pin part 4 protrudes from the end face 2a of the shoulder part 2 and is used as the probe pin of the tool. The groove 4b portion of the probe pin part 4 is provided inside the shoulder part 2. The thread orientation of the spiral groove 4a is the reverse of the thread orientation of the spiral groove 4b. For example, as shown in FIG. 1 and FIG. 3, the thread orientation of the groove 4a can be left-handed (tightening counterclockwise as viewed by the observer); and the thread orientation of the groove 4b can be right-handed (tightening clockwise as viewed by the observer). That is, the groove 4a can be the root of a left-handed thread; and the groove 4b can be the root of a right-handed thread.

However, the thread orientations of the grooves 4a and 4b are not limited to those illustrated. For example, the thread orientation of the groove 4a can be clockwise; and the thread orientation of the groove 4b can be counterclockwise.

The pitch dimensions and the depths of the grooves 4a and 4b are not particularly limited. Between the grooves 4a and 4b, the pitch dimensions can be the same; the depths can be the same; or at least one of the pitch dimension or the depth can be different.

In this case, the groove 4a portion of the probe pin part 4 is used as the probe pin of the tool and is inserted into the joining members. Therefore, it is favorable for the groove 4a portion of the probe pin part 4 to be stronger than the portion where the groove 4b is provided. For example, the pitch dimension of the groove 4a can be shorter than that of the groove 4b. For example, the groove 4a can be shallower than the groove 4b. Damage of the probe pin part 4 can be suppressed by setting the strength of the groove 4a portion of the probe pin part 4 to be larger than the strength of the groove 4b portion of the probe pin part 4.

The groove 4b is for fastening the two parts; and considering the availability of cutting tools for forming the grooves, it is desirable to use a form conforming to thread standards. On the other hand, it is favorable for the groove 4a of the probe pin part 4 to be shallower than the groove depths specified in thread standards. This is to ensure that the groove 4a portion can withstand the shear force applied at high temperatures. The groove 4a portion functions as the probe pin of the tool, is inserted into the joining members, and stirs the joining members at a high temperature. The horizontal movement of the tool while rotating applies a shear force to the probe pin part 4. The likelihood of the groove 4a becoming a starting point for breakage can be reduced by setting the groove 4a to be shallow.

Although the form of the shoulder part 2 is not particularly limited, it is favorable to use a circular columnar shape considering the anti-wear properties, the manufacturability, etc.

A spiral ridge 2b1 that conforms to the groove 4b is provided on the inner wall of a hole 2b having an opening at the end face 2a of the shoulder part 2. For example, a left-handed ridge 2b1 can be provided when a left-handed groove 4b is provided (tightening counterclockwise). That is, the ridge 2b1 can be the crest of a left-handed thread when the groove 4b is the root of a left-handed thread. For example, a right-handed ridge 2b1 can be provided when a right-handed groove 4b is provided (tightening clockwise). That is, the ridge 2b1 can be the crest of a right-handed thread when the groove 4b is the root of a right-handed thread.

The shank 3 is provided at the end of the shoulder part 2 opposite to the side where the hole 2b (corresponding to an example of the first hole) opens. The shank 3 and the shoulder part 2 are joined at the end of the shoulder part 2 opposite to the side where the hole 2b opens. The shank 3 is the mounting portion of the tool 1 for a friction stir welding apparatus 100. For example, the shank 3 can have a circular columnar shape.

Although a circular columnar probe pin part 4 is illustrated in FIG. 1 to FIG. 3, this is not limited thereto.

For example, a diameter of the end of the probe pin part 4 on the side where the groove 4a is provided may decrease toward the tip of the probe pin part 4. For example, the portion (the probe pin) of the probe pin part 4 where the groove 4a is provided can have a truncated conical shape. A truncated conical shape means that the enveloping shape is a truncated cone. The groove 4a portion of the probe pin part 4 protrudes from the end face 2a of the shoulder part 2 and is inserted into the joining members. The load on the tool 1 and the members when inserting the tool 1 into the joining members can be reduced by the truncated conical shape of this portion.

For example, when inserting the rotating tool into the hard joining members, the members deform because the frictional heat is still insufficient and the members have not softened yet. A large force is applied to the probe pin part 4 at this time. Here, because the end of the probe pin part 4 has a truncated conical shape and the cross-sectional area of the tip is reduced, the load on the probe pin part 4 increases gradually when inserting into the members; and the damage of the probe pin part 4 can be prevented.

Although the materials of the probe pin part 4, the shoulder part 2, and the shank 3 are not particularly limited, the materials of the probe pin part 4 and the shoulder part 2 are harder than the materials of the joining members.

For example, when aluminum is to be welded, the material of the probe pin part 4 may be tool steel. For example, a tungsten alloy may be used when copper is to be welded.

The materials of the shoulder part 2 and the shank 3 may be the same as or different from the material of the probe pin part 4.

Effects of the groove 4a will now be described.

Because the spiral groove 4a is provided, plastic flow of the joining members occurs not only in the rotation direction of the tool 1 but also in the probe pin tip direction when the probe pin part 4 is inserted into the joining members. In such a case, the tool 1 is rotated so that the material plastically flows in the probe pin tip direction (toward the back faces of the joining members). For example, when the groove 4a is left-handed, the tool 1 is rotated clockwise when viewed from the shank 3 side. If a right-handed groove 4a is provided, the tool 1 is rotated counterclockwise when viewed from the shank 3 side.

By causing the material to flow plastically toward the back faces of the joining members, the insertion depth of the groove 4a portion can be shallow. For example, by inserting the groove 4a portion to a depth of 90% to 95% of the thickness of the joining members, 100% of the thickness can be joined due to the plastic flow in the central-axis direction of the probe pin part 4.

For example, the insertion depth of the tool 1 into the joining members is set to 90% to 95% of the thickness of the joining members so that the probe pin part 4 does not contact and damage the backing under the joining members when welding. Even with 5% to 10% of the thickness of the members remaining, 100% of the thickness can be joined due to the plastic flow toward the back faces of the joining members.

The portion where the groove 4b is provided will now be described further.

FIG. 4 is a schematic view illustrating the state when manufacturing a probe pin 54 according to a comparative example.

The probe pin 54 and the shoulder part 2 illustrated in FIG. 4 are formed integrally.

As shown in FIG. 4, a cutting tool 200 is pressed against the side face of such a probe pin 54 when forming the spiral groove in the side face of the probe pin 54. In such a case, it is difficult to form the spiral groove due to the interference between the cutting tool 200 and the end face 2a if a protruding length (a height dimension) H of the probe pin 54 from the end face 2a is short.

For example, generally, the ratio of the diameter of the probe pin 54 to the shoulder diameter of the tool is about 1:2.5 to 1:3. Accordingly, the distance from the shoulder perimeter to the side face of the probe pin 54 is about 1/3 of the shoulder diameter.

The diameter of the probe pin 54 often is not less than 1 times the height of the probe pin 54 to prevent damage when welding. Therefore, when the tool is used for a plate having a thickness of 2.0 mm, for example, the diameter of the probe pin 54 is set to be about 3 mm; and the shoulder diameter is set to be about 9 mm. The distance from the shoulder perimeter to the pin side face is set to be about 3 mm. In such a case, the interference between the shoulder perimeter and the cutting tool makes it difficult to groove the side face of the probe pin 54 having a height of 1.7 mm to 1.8 mm. Although a thinner cutting tool could be used, such a cutting tool is damaged easily; and the manufacturing cost of the tool undesirably increases.

Therefore, it is difficult to form the spiral groove when the protruding length H of the probe pin 54 is 2 mm or less.

As a result, if the probe pin 54 and the shoulder part 2 are formed integrally, a spiral groove cannot be provided in the probe pin 54 having a small external dimension.

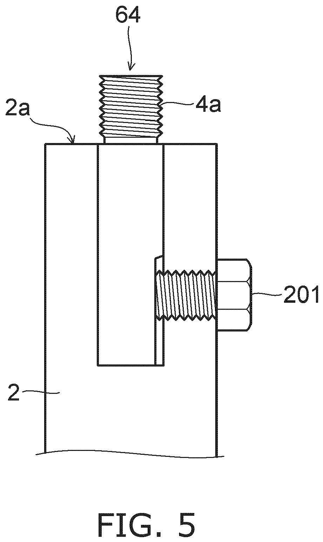

FIG. 5 is a schematic cross-sectional view illustrating a probe pin 64 according to a comparative example.

As shown in FIG. 5, the probe pin 64 is separable from the shoulder part 2; therefore, the spiral groove can be formed in the side face of the probe pin 64 even when the protruding length of the probe pin 64 from the end face 2a is short. In other words, the spiral groove 4a can be provided in the side face of the portion of the probe pin 64 protruding from the end face 2a.

A spiral groove is not provided in the side face of the portion of the probe pin 64 provided inside the shoulder part 2. A spiral groove is not formed in the inner wall of a hole having an opening at the end face 2a into which the probe pin 64 is inserted. Therefore, the fixing of the probe pin 64 is performed by a set screw 201.

The set screw 201 that fixes the probe pin 64 to the shoulder part 2 may loosen when performing friction stir welding. The loosening of the set screw 201 may allow a change of the protruding length of the probe pin 64 from the end face 2a. If the probe pin 64 juts further from the end face 2a, the probe pin 64 may be damaged by interference between the tip of the probe pin 64 and the placement part of the joining members of the friction stir welding apparatus 100, etc. If the probe pin 64 retracts with respect to the end face 2a, the insertion depth into the joining members shortens. Therefore, there is a risk that the strength of the welded portion may decrease; defects may occur; and the quality of the welded portion may degrade.

Conversely, the spiral ridge 2b1 that is provided in the inner wall of the hole 2b opening at the end face 2a screws into the spiral groove 4b provided in the side face of the probe pin part 4 according to the embodiment.

Here, a rotational force in the reverse direction acts on the probe pin part 4 when the rotating probe pin part 4 is inserted into the joining members.

As described above, when the groove 4a is left-handed, the tool 1 is rotated clockwise when viewed from the shank 3 side. Therefore, a counterclockwise reaction force acts on the probe pin part 4. A right-handed groove 4b is provided when the left-handed groove 4a is provided; therefore, the probe pin part 4 is pressed toward the interior of the shoulder part 2 by the counterclockwise reaction force acting on the probe pin part 4. Therefore, the change of the protruding length of the probe pin part 4 from the end face 2a can be suppressed.

If the groove 4a is right-handed, the tool 1 is rotated counterclockwise when viewed from the shank 3 side. Therefore, a clockwise reaction force acts on the probe pin part 4. A left-handed groove 4b is provided when the right-handed groove 4a is provided; therefore, the probe pin part 4 is pressed toward the interior of the shoulder part 2 by the clockwise reaction force acting on the probe pin part 4. Therefore, the change of the protruding length of the probe pin part 4 from the end face 2a can be suppressed.

A method for mounting the probe pin part 4 will now be illustrated.

As shown in FIGS. 2A and 2C, a shaft 4c can be provided at the groove 4a end of the probe pin part 4. The probe pin part 4 and the shaft 4c can be formed integrally. The shaft 4c has a columnar shape and can be gripped by a tool such as a wrench, etc. Therefore, the probe pin part 4 can be tightened by rotating the shaft 4c using the wrench or the like when inserting the groove 4b side of the probe pin part 4 into the hole 2b. The shaft 4c is removed by machining after mounting the probe pin part 4 in the shoulder part 2. Thus, the probe pin part 4 can be mounted in the shoulder part 2.

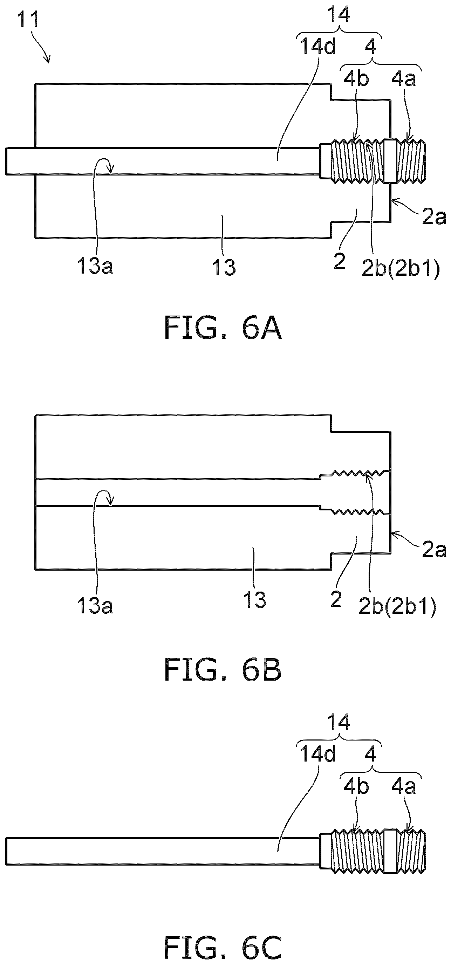

FIGS. 6A to 6C are schematic views illustrating a friction stir welding tool 11 according to another embodiment.

FIG. 6A is a schematic cross-sectional view of the friction stir welding tool 11 (hereinbelow, called simply the tool 11).

FIG. 6B is a schematic cross-sectional view of the shoulder part 2 and a shank 13.

FIG. 6C is a schematic view of a probe pin part 14.

As shown in FIGS. 6A to 6C, the tool 11 includes the shoulder part 2, the shank 13, and the probe pin part 14.

The shoulder part 2 and the shank 13 can be formed integrally.

The shank 13 may be the shank 3 described above to which a hole 13a (corresponding to an example of a second hole) is added. One end of the hole 13a communicates with the hole 2b provided in the shoulder part 2. The other end of the hole 13a is open at the end face of the shank 13 opposite to the shoulder part 2 side.

The probe pin part 14 may be the probe pin part 4 described above to which a shaft 14d is added on the shoulder part side of the probe pin part 4. The probe pin part 4 and the shaft 14d can be formed integrally. The material of the shaft 14d can be the same as the material of the probe pin part 4.

The shaft 14d may have a columnar shape. One end of the shaft 14d is connected to the groove 4b end of the probe pin part 4.

When the probe pin part 14 is mounted in the shoulder part 2 as shown in FIG. 6A, the shaft 14d extends through the interior of the hole 13a; and the end of the shaft 14d protrudes from the end face of the shank 13 opposite to the shoulder part 2 side.

In other words, the shaft 14d is provided at the groove 4b end of the probe pin part 4. The shaft 14d protrudes from the end face of the shank 13 where the hole 13a opens.

The end of the shaft 14d protrudes and therefore can be gripped by a tool such as a wrench, etc. Therefore, the probe pin part 14 can be tightened when attaching and loosened when detaching. In other words, the probe pin part 14 is easily attachable and detachable.

Also, the protruding end of the shaft 14d can butt against a tool holder 103b of a processing part 103 described below, etc. Therefore, the change of the protruding length of the probe pin part 14 from the end face 2a can be suppressed. In such a case, the fastening between the shoulder part 2 and the probe pin part 14 is easier because the fastening tightness is not so critical.

According to the tools 1 and 11 according to the embodiment, the reaction force that acts on the probe pin parts 4 and 14 during the friction stir welding presses the probe pin parts 4 and 14 toward the interior of the shoulder part 2. Therefore, changes of the protruding lengths of the probe pin parts 4 and 14 from the end face 2a can be suppressed.

### Friction stir welding apparatus

The friction stir welding apparatus 100 will now be illustrated.

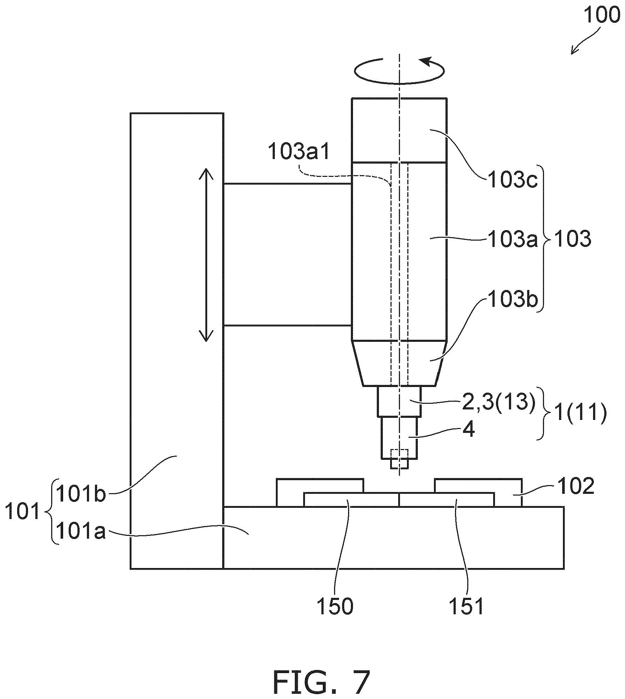

FIG. 7 is a schematic view illustrating the friction stir welding apparatus 100.

The friction stir welding apparatus 100 joins a member 150 and a member 151. The friction stir welding apparatus 100 is not limited to butt-joint welding; and the joining form of the members can be modified appropriately.

The friction stir welding apparatus 100 may be placed on a floor surface, etc.

The processing part 103 of the friction stir welding apparatus 100 may be mounted to the hand of a six-axis vertical articulated robot, etc.

As shown in FIG. 7, a placement part 101, a holder 102, and the processing part 103 are provided in the friction stir welding apparatus 100.

The placement part 101 includes a placement platform 101a and a raising/lowering part 101b.

The members 150 and 151 are placed on the placement platform 101a. The materials of the members 150 and 151 are not particularly limited as long as plastic flow is caused by the friction stir welding. The materials of the members 150 and 151 may be, for example, metals. The metals may be, for example, aluminum, an aluminum alloy, copper, a copper alloy, titanium, a titanium alloy, magnesium, a magnesium alloy, iron, etc.

The forms of the members 150 and 151 are not particularly limited. For example, the members 150 and 151 may have plate configurations as illustrated in FIG. 7; or the members 150 and 151 that have block configurations may be used.

The members 150 and 151 that are held by the holder 102 may be moved in the horizontal direction by the placement platform 101a. The placement platform 101a may be, for example, an XY table, etc.

For example, the raising/lowering part 101b moves, in the vertical direction, the processing part 103 and the tool 1 (11) mounted to the processing part 103. The raising/lowering part 101b may include, for example, a control motor such as a servo motor or the like, a guide for raising and lowering, a transmission member such as a ball screw, etc.

The placement platform 101a may not move in the horizontal direction; and the raising/lowering part 101b may be configured to move in the vertical direction and the horizontal direction.

The holder 102 holds the members 150 and 151. The configuration of the holder 102 is not particularly limited as long as the members 150 and 151 can be held. For example, the holder 102 may include a hydraulic cylinder, a control motor such as a servo motor, etc., and may hold the members 150 and 151 mechanically. The holder 102 may include an electromagnetic chuck, a vacuum chuck, etc.

The processing part 103 includes a processing head 103a, the tool holder 103b, and a rotating motor 103c.

The processing head 103a is connected to the raising/lowering part 101b. The tool holder 103b is provided rotatably at one end of the processing head 103a; and the rotating motor 103c is mounted at the other end of the processing head 103a.

A rotation shaft 103a1 is provided inside the processing head 103a. The rotating motor 103c is connected to one end of the rotation shaft 103a1; and the tool holder 103b is connected to the other end of the rotation shaft 103a1. Therefore, the rotating motor 103c can rotate, via the rotation shaft 103a1, the tool holder 103b and the tool 1 (11) mounted to the tool holder 103b.

The tool holder 103b holds the shank 3 (13) of the tool 1 (11). The tool holder 103b may be, for example, a mechanical chuck holding the shank 3 (13), etc.

The rotating motor 103c may be, for example, a control motor such as a servo motor, etc.

The rotating motor 103c rotates the tool 1 (11) during the friction stir welding. The raising/lowering part 101b lowers the rotating tool 1 (11) toward the members 150 and 151 and inserts the probe pin part 4 into the members 150 and 151. Then, the placement platform 101a moves the tool 1 (11) along the butt-joint between the member 150 and the member 151 by changing the position of the rotating tool 1 (11) in the horizontal direction. The raising/lowering part 101b may be configured to move the rotating tool 1 (11) in the horizontal direction and the vertical direction.

When the friction stir welding ends, the raising/lowering part 101b extracts the rotating tool 1 (11) from the members 150 and 151.

### Friction stir welding method

A friction stir welding method according to the embodiment uses the friction stir welding tool 1 (11) described above.

The friction stir welding method rotates the tool 1 (11) in the reverse direction of the thread orientation of the groove 4a when the tool 1 (11) is viewed from the shank 3 (13) side.

For example, the tool 1 (11) is rotated clockwise when viewed from the shank 3 (13) side when the thread orientation of the groove 4a is left-handed (i.e., a left-handed thread).

For example, the tool 1 (11) is rotated counterclockwise when viewed from the shank 3 (13) side when the thread orientation of the groove 4a is right-handed (i.e., a right-handed thread).

Thus, the probe pin part 4 (14) is pressed toward the interior of the shoulder part 2. Therefore, the change of the protruding length of the probe pin part 4 (14) from the end face 2a can be suppressed.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the invention. Moreover, the above-mentioned embodiments can be carried out in combination.

## Claims

1. A friction stir welding tool (1), comprising:
a probe pin part (4) having a first groove (4a) and a second groove (4b), the first groove being provided at one end portion of the probe pin part and having a spiral configuration, the second groove being provided at another end portion of the probe pin part and having a spiral configuration of a reverse thread orientation of the first groove, the probe pin part having a columnar shape; and
a shoulder part (2) having a first hole (2b), a ridge being provided on an inner wall of the first hole and having a spiral configuration conforming to the second groove (4b),
the probe pin part (4) and the shoulder part (2) being fastened at the second groove (4b) so that a portion of the probe pin part where the first groove (4a) is provided protrudes from an end face (2a) of the shoulder part (2).

2. The tool according to claim 1, wherein the first groove (4a) is a screw groove.

3. The tool according to claim 1 or claim 2, wherein
the second groove (4b) is a screw groove, and
the ridge having the spiral configuration is a screw thread.

4. The tool according to any one of claim 1 to claim 3, wherein a diameter of the probe pin part (4) where the first groove (4a) is provided decreases toward a tip of the probe pin part (4).

5. The tool according to any one of claim 1 to claim 4, wherein a material of the probe pin part (4) is different from a material of the shoulder part (2).

6. The tool according to any one of claim 1 to claim 5, further comprising a shank (3) provided at an end of the shoulder part (2) opposite to a side of the shoulder part where the first hole (2b) opens,
the shank (3) having a second hole (13a) communicating with the first hole (2b) at one end of the second hole (13a), another end of the second hole (13a) opening at an end face of the shank (3) on a side opposite to the shoulder part (2) side,
the probe pin part (4) further including a shaft (4c) provided at the end of the probe pin part (4) where the second groove (4b) is provided, the shaft (4c) protruding from the end face of the shank (3) where the second hole (4b) opens.

7. A friction stir welding apparatus (100), comprising:
the friction stir welding tool (1) according to any of claim 1 to claim 6; and
a processing part (103) configured to rotate the friction stir welding tool (1).

8. A friction stir welding method using the friction stir welding tool (1) according to any one of claim 1 to claim 6, the method comprising:
rotating the friction stir welding tool (1) clockwise when viewed from the shank (3) side when a thread orientation of the first groove (4a) of the probe pin part (4) is left-handed, or
rotating the friction stir welding tool (1) counterclockwise when viewed from the shank (3) side when the thread orientation of the first groove (4a) of the probe pin part (4) is right-handed.
